Europäisches Patentamt

European Patent Office

Office européen des brevets

(11) Publication number: **0 281 694**
**A1**

# EUROPEAN PATENT APPLICATION

(21) Application number: 87302065.5

(51) Int. Cl.⁴: **B64D 11/06** , A47C 7/18

(22) Date of filing: **11.03.87**

(43) Date of publication of application:
**14.09.88 Bulletin 88/37**

(84) Designated Contracting States:
**DE GB NL**

(71) Applicant: **Magerik Ltd**
**The Capital Building Westbourne Street**
**High Wycombe Bucks HP11 2PZ(GB)**

(72) Inventor: **Leslie, James Simpson**
**3 Deep Acres, Chesham Bois,**
**Amersham, Bucks(GB)**

(74) Representative: **Allsop, John Rowland**
**Rowland Allsop & Co. Black Boy Yard 15**
**High Street**
**West Wycombe High Wycombe, Bucks. HP14**
**3AE(GB)**

(54) **A seat.**

(57) A seat particularly for use in passenger aircraft formed of inner cushioning material covered with a flameretardant treated layer of cushioning material. To retain the comfort providing characteristics of the treated outer layer it is provided with strategically positioned openings or vents extending within the seat interior.

## FIG.1.

EP 0 281 694 A1

## "A Seat"

### FIELD OF THE INVENTION

The present invention relates to a seat particularly a seat for a passenger aircraft.

### BACKGROUND OF THE INVENTION

It is present day practice, in the manufacture of aircraft seats, to employ the use of foam cushions covered with a decorative material according to the users choice, the foam cushions providing the necessary comfort factor to the seat.

The base constituent material of foam cushions is polyurethane, and to meet current CAA and FAA safety regulations in the aerospace industry, the polyurethane is mixed with a flame retardant additive.

By 1987 all airlines will have to comply with newly issued rulings governing flammability. These rulings will require that the foam used in passenger seats is able to withstand an intense heat source for at least two minutes, without losing more than 10% of the total weight of foam plus the decorative cover.

To meet these stipulations two possibilities for improvement are available to the industry at the present time.

The first involves the use of a fireblock layer which comprises a material of felt or woven cloth or a combination of the two, which is placed between the foam cushion and the decorative cloth.

This arrangement has several disadvantages. Clearly a modification of this nature adds complexity during manufacture, since additional work is required to fit the fireblock to the seat, including the need to bond it to the rear structure, and to alter the decorative cover in order to accommodate it, and possibly the cushion itself.

The resulting structure also renders replacement of the foam cushions more difficult, increases weight and cost, and importantly reduces comfort.

Another proposal is to use polyurethane foam which has been treated with a flame retardant additive to render it capable of withstanding the intense heat used in regulatory tests.

The main disadvantage of this method however, is that the treatment involved dramatically reduces the elasticity and flexibility of the base material thus giving a "dead" feeling to the cushion necessarily accompanied by a much reduced comfort factor.

Another attempt at providing an answer to the problem involves the use of a non-polyurethane foam but this is fraught with difficulties, such as for example, that due to the low structural strength of the formaldehydes ranging to the high weight and moisture problems of the silicones.

### SUMMARY OF THE INVENTION

The present invention has the objective of overcoming the problems and disadvantages of the prior art in its attempts to meet aircraft seat fire safety regulations as demanded by regulatory bodies within the aerospace industry.

According to the invention there is provided a seat comprising a sitting portion, and a back-support portion, both portions being formed of a comfort-providing inner core of cushioning material with a flame retardant treated layer of cushioning material overlying the core, said layer being provided with openings or vents extending within the interior thereof to maintain the comfort-providing characteristics of said flame retardant treated outer layer.

The openings or vents may be in the form of parallel slits in the sitting portion, and/or in strategically placed positions in the back-support portion, for example in those areas which support the lumbar and neck or head regions of the body.

### BRIEF DESCRIPTION OF THE DRAWINGS

Other features and advantages of the invention will become apparent from the following description of a preferred embodiment of the invention taken with reference to the accompanying drawings wherein:

Fig 1 is a perspective view of an aircraft seat according to the invention, the seat having a cutout portion showing the internal structure in detail and

Fig 2 is an enlarged view illustrating three variations of internal cross-section for the surface channels provided in the seat shown in Fig 1.

### BEST MODES FOR CARRYING OUT THE INVENTION

The aircraft twin passenger seat shown in the drawings comprises a sitting portion 1 and back portion 2.

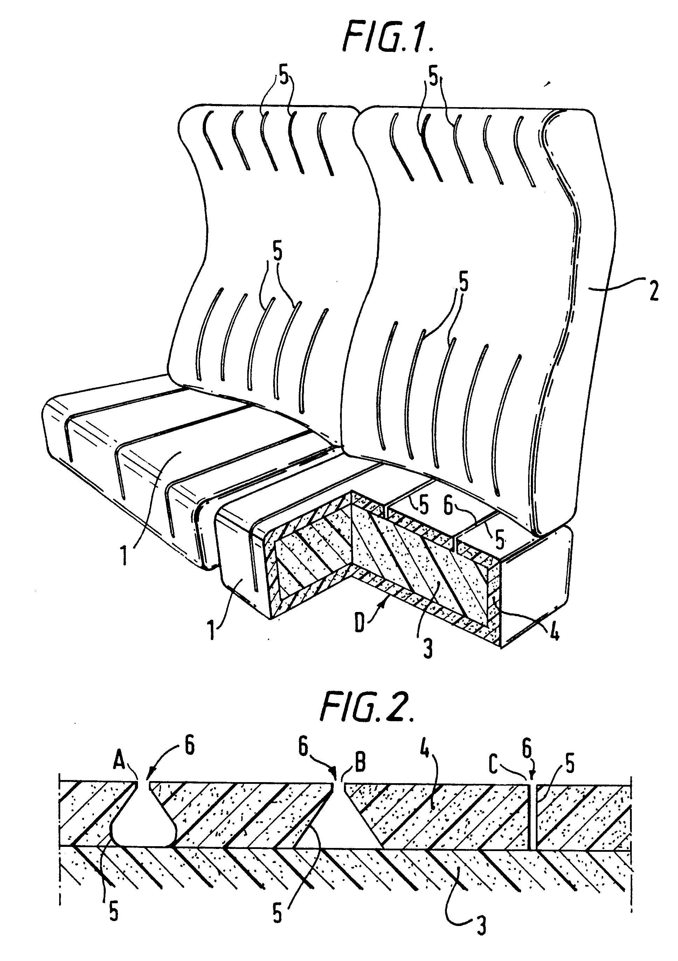

As the detail D in Fig 1 illustrates, each portion 1 and 2 is made if an inner core 3 of polyurethane foam, having an outer layer 4 made of flame retardant foam. The layer 4 may be any foam material treated to meet the demands of regulatory testing.

The layer 4 is provided with openings or vents 5, extending within its interior. In Fig. 1 the openings or vents 5 are in the form of parallel channels extending longitudinally of the sitting portion 1, and those regions of the back support portion 2 against which rest the lumbar and neck and/or head parts of the body.

The channels 5 have narrow slit-like entrances 6, and may have varying depths and internal cross-sections as shown in Fig. 2.

In Fig. 2 the channel variation A extends in depth from its slit-like entrance 6 to the core material 3 and has a bulbous cross-section, the second variation B extending in depth also the core material 3 but being triangular in cross-section, while in third variation C the slit like entrance cross-section extends without variation to the depth of the core material 3.

The intent and purpose of the channels 5 is to compensate for the reduced elasticity of the flame retardant foam layer 4 over the inner core material 3, since the cavities formed in the flame retardant layer 4 by means of the channel 5 allow the material of the layer 4 more freedom of movement to "expand" into them under the weight of a seat occupant, thus obviating the undesirable "dead feeling" referred to above.

The structure of the seat may be made in two ways. It may be prefabricated, the foam being cut to shape from large "buns" and the pieces bonded together, or it could be moulded in a two stage process using a "cold-cure" moulding technique. In this latter method the core is formed in one mould and then transferred to a separate mould where the protective coating is then introduced and flexibility producing openings or vents 5 are formed therein.

Using this type of cushion, according to the invention, and explained in a preferred form hereinbefore, the airline industry will be able, cost effectively, to conform to the impending new safety regulations relating to existing in-built fire hazards in aircraft passenger seats.

## Claims

1. A seat comprising a sitting portion, and a back-support portion, both portions being formed of a comfort-providing inner core of cushioning material with a flame retardant treated layer of cushioning material overlaying the core, said layer being provided with openings or vents extending within the interior thereof to maintain the comfort-providing characteristics of said flame retardant treated outer layer.

2. A seat as claimed in claim 1 wherein said openings or vents in the form of parallel channels in the outer layer.

3. A seat as claimed in claim 2 wherein the channels extend in depth and unvarying cross-section, to the inner core material.

4. A seat as claimed in claim 2 wherein the channels extend in depth with varying cross-section to the inner core material.

5. A seat as claimed in claim 4 wherein the channels are triangular shaped in cross-section.

6. A seat as claimed in claim 4 wherein the channels are bulbous shaped in cross-section.

7. A seat particularly an aircraft passenger seat substantially as hereinbefore described with reference to and as illustrated in the accompanying drawings.

*FIG.1.*

*FIG.2.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 110 881 (THOMPSON) <br> * Column 1, line 61 - column 2, line 49 * | 1 | B 64 D 11/06 <br> A 47 C 7/18 |
| A | GB-A-2 137 492 (METZELER KAUTSCHUK) <br> * Abstract * | 1 | |
| A | EP-A-0 021 191 (BAYER AG) <br> * Abstract * | 1 | |
| A | US-A-3 669 498 (MEYERS) <br> * Column 2, lines 7-56 * | 1 | |

TECHNICAL FIELDS SEARCHED (Int. Cl.4)

B 64 D
A 47 C

The present search report has been drawn up for all claims

| Place of search | Date of completion of the search | Examiner |
|---|---|---|
| THE HAGUE | 10-11-1987 | HAUGLUSTAINE·H.P.M. |